# DEMANDE DE BREVET EUROPEEN

(11) **EP 1 905 296 A1**
(43) Date de publication de la demande: **02.04.2008**
(21) Numéro de dépôt: 07291136.5
(22) Date de dépôt: 25.09.2007
(51) Int. Cl.: A01G 5/00, A23N 15/06, A23N 15/08, B41J 3/407, B41M 1/30

(54) **Équipement et procédé pour la personnalisation de fleurs par impression sur une partie organique**

(30) Priorité: 27.09.2006 FR 0608501
(71) Demandeur: Tattoo Fleurs, 75008 Paris (FR)
(72) Inventeur: Hagege, René, 75017 Paris (FR)
(74) Mandataire: Bredema

(57) **Abrégé**

La présente invention concerne un équipement pour l'impression d'une fleur, caractérisé en ce qu'il comporte un premier poste d'alimentation en fleurs naturelles, un moyen de déplacement d'une fleur vers un poste d'impression comportant une tête d'impression à jet d'encre alimentée avec des encres à séchage UV, et un moyen de déplacement vers une source d'ultraviolet.

## Description

La présente invention concerne un équipement et un procédé pour la personnalisation de fleurs par impression sur une partie organique, notamment sur les pétales.

On connaît par le brevet américain US05305550 une solution consistant à appliquer manuellement un message sur les pétales d'une fleur.

On connaît également par le brevet PCT WO03027768. Ce brevet décrit des systèmes et des procédés destinés à former une image sur un produit organique pour assurer la communication avec le destinataire ou personnaliser le produit organique d'une autre manière. L'image est appliquée par photogravure sur un matériau photosensible d'un plan imprimé ou d'un cliché grâce à un film positif. On applique de l'encre au cliché, et on met un support de transfert en contact avec le cliché. Le support de transfert absorbe l'encre dans la zone d'image du cliché et crée une image négative sur le support. Le support de transfert transfère l'image encrée sur un produit organique tel qu'un pétale de fleur ou une feuille. On laisse ensuite sécher l'image imprimée sur un produit organique tel qu'un pétale de fleur ou une feuille. L'image sur le produit organique sert à communiquer un message au destinataire et/ou personnaliser le produit.

Ces solutions ne sont pas adaptées à la production de fleurs personnalisées en grandes séries, et à des prix acceptables. Elles nécessitent en effet des manipulations qui ne peuvent être réalisées que par un opérateur humain et/ou impliquant des délais d'exécution relativement longs.

Le but de la présente invention est de proposer une solution totalement automatisable, sans intervention humaine.
Un autre but est de proposer une solution facilement paramétrable, et ne provoquant pas de dégradation du support, par exemple du pétale de la fleur, sur lequel la personnalisation est apposée.

Pour atteindre ces buts, l'invention concerne selon son acception la plus générale un équipement pour l'impression d'une fleur, caractérisé en ce qu'il comporte un premier poste d'alimentation en fleurs naturelles, un moyen de déplacement d'une fleur vers un poste d'impression comportant une tête d'impression à jet d'encre alimentée avec des encres à séchage UV, et un moyen de déplacement vers une source d'ultraviolet.

Avantageusement, l'équipement selon l'invention comporte des berceaux pour recevoir et déplacer chaque fleur et d'assurer la rotation de la fleur, chaque berceau présentant un support de la tige et un moyen d'entraînement pour le déplacement entre le poste d'alimentation, la tête d'impression et la source d'ultraviolet.

Selon un mode de réalisation préféré, la tête d'impression est fixe pendant l'étape d'impression.

L'invention concerne également un procédé d'impression d'une fleur caractérisé en ce qu'il comporte une étape d'impression avec une tête à jet d'encre alimentée avec des encres à séchage UV et une étape d'exposition à une source ultraviolette.

De préférence, la fleur est mise en rotation pendant l'étape d'impression par un berceau supportant la tige, la tête d'impression restant fixe.

L'invention concerne encore une fleur personnalisée présentant une zone imprimée selon le procédé conforme à l'invention, caractérisée en ce que ladite zone impression présentant une encre séchable par UV.
L'invention sera mieux comprise à la lecture de la description qui suit, concernant un exemple non limitatif de réalisation, se référant aux dessins annexés où :
- la figure 1 représente une vue schématique d'un équipement selon l'invention,
- la figure 2 représente une vue schématique du poste d'impression,
- la figure 3 représente une vue d'une fleur imprimée selon le procédé conforme à l'invention.

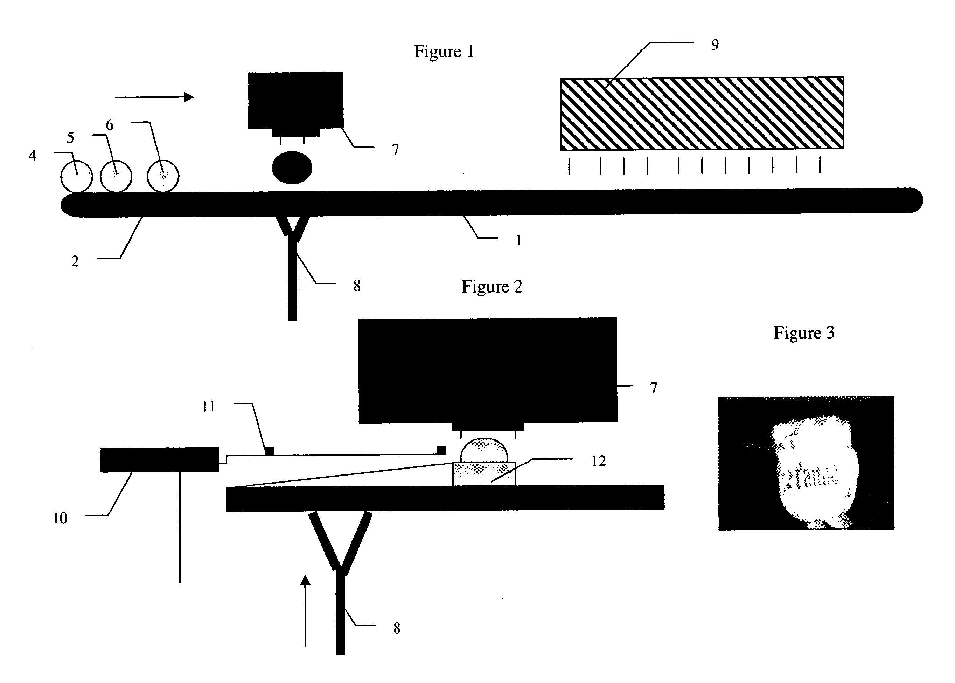

L'équipement représenté en figure 1 comporte un bâti (1) sur lequel sont montés un poste d'alimentation (2), un poste d'impression (7) et un poste d'insolation ultraviolet (9).

Le poste d'alimentation est constitué d'un ensemble de berceaux (4 à 6) dans lesquels sont placées les fleurs. Les fleurs sont disposées horizontalement, la tige étant disposée dans un support laissant dépasser la tête de la fleur.
Chacun des berceaux est mobile par rapport au bâti (1) afin d'amener une fleur sous le poste d'impression (7).

Ce poste d'impression comporte une tête d'impression à jet d'encre. La résolution de la tête d'impression est de 450 dpi (points par inch). L'angle de la tête d'impression par rapport au sens de défilement de la fleur est réglable et permet de varier la largeur d'impression et la résolution verticale. La vitesse d'impression détermine la résolution horizontale maximale (dans le sens de défilement). Une fourche (8) soulève la tête de la fleur placée dans le berceau pour la positionner sous la tête d'impression à jet d'encre.
Le poste d'impression est représenté en coupe longitudinale en figure 2.
La fleur est mise en rotation par un mécanisme comprenant un moteur (10) entraînant une tringle coudée (11) recevant la tige de la fleur et entraînant sa rotation axiale. La tête de la fleur est logée dans un support concave (12).
L'impression est commandée de façon connue, avec un asservissement par le signal de position angulaire de la fleur.
L'impression est réalisée avec une encre constituée principalement de monomères et de prépolymères réticulables par exposition à une source de rayonnements ultraviolets. Une telle encre est par exemple à radicaux libres, l'exposition à un rayonnement UV permet à un photoamorceur de former des radicaux libres, étape suivie d'une réaction en chaîne de polymérisation plutôt qu'une encre cationique, comme les résines époxy, sensible à l'humidité.
Alternativement, il est possible d'utiliser une des encres EB (Electron-beam ou bombardement d'électrons). Dans ce cas, la fleur est soumise après impression à un bombardement d'électrons.

Le dernier poste (9) est un poste de séchage permettant de solidifier et fixer définitivement l'encre, sans altérer les pétales de la fleur.
La figure 3 représente une fleur marquée avec un équipement selon l'invention.

## Revendications

1. - Équipement pour l'impression d'une fleur naturelle avec des encres à séchage par ultraviolet ou par bombardement d'électrons, comportant un poste d'alimentation en fleurs naturelles (2) et un poste d'impression (7), **caractérisé en ce qu'**il comprend en outre un moyen de déplacement d'une fleur vers ledit poste d'impression (7) alimenté avec des encres à séchage ultraviolets ou à bombardement d'électrons et un moyen de déplacement vers une source de séchage (9), lesdits moyens de déplacement comprenant des berceaux (4,5,6) permettant de recevoir la fleur grâce à un support de tige (8), de déplacer chaque fleur et d'assurer la rotation de la fleur lors de l'impression, la tête d'impression du poste d'impression (7) restant fixe pendant la durée de son fonctionnement.

2. - Équipement selon la revendication 1, **caractérisé en ce que** la tête d'impression est fixe pendant l'étape d'impression.

3. - Équipement selon la revendication 1, **caractérisé en ce que** la tête d'impression est alimentée par des encres à séchage ultraviolet et **en ce que** le poste de séchage (9) comporte une source de rayonnements ultraviolets.

4. - Équipement selon la revendication 1, **caractérisé en ce que** la tête d'impression est alimentée par des encres à séchage EB et **en ce que** le poste de séchage (9) comporte une source de bombardement d'électrons.

5. - Procédé d'impression d'une fleur naturelle comprenant une étape d'impression avec une tête à jet d'encre alimentée avec des encres à séchage par ultraviolet ou par bombardement d'électrons et une étape de séchage, **caractérisé en ce que**, pendant l'étape d'impression, la fleur est déplacée et mise en rotation par un berceau (4,5,6) supportant la tige de la fleur grâce à un support de tige (8).

6. - Fleur personnalisée présentant une zone imprimée selon le procédé conforme à la revendication 5, **caractérisée en ce que** ladite zone d'impression présente une encre séchable par ultraviolets.
